# EUROPÄISCHE PATENTANMELDUNG

(11) **EP 3 767 561 A1**
(43) Veröffentlichungstag der Anmeldung: **20.01.2021**
(21) Anmeldenummer: 19020428.9
(22) Anmeldetag: 17.07.2019
(51) Int. Cl.: G06Q 10/06, G06Q 50/04

(54) **VERFAHREN ZUM MODELLIEREN EINES HERSTELLUNGSPROZESSES EINER VERFAHRENSTECHNISCHEN VORRICHTUNG**

(71) Anmelder: Linde GmbH, 82049 Pullach (DE)
(72) Erfinder: Dahmen, Rolf, 81369 München (DE); Hecht, Thomas, 82178 Puchheim (DE); Weterings, Pieter, 86929 Penzing (DE); Ruess, Stefan, 80636 München (DE); Neubauer, Christian, 82049 Pullach (DE)
(74) Vertreter: Imhof, Dietmar

(57) **Zusammenfassung**

Die vorliegende Erfindung betrifft ein Verfahren zum computerimplementierten Modellieren eines Herstellungsprozesses einer verfahrenstechnischen Vorrichtung, welche aus Modulen und Komponenten zusammengesetzt ist, wobei ein Anlagenmodell, welches die herzustellende verfahrenstechnische Vorrichtung beschreibt, in einer computerimplementierten Datenbank erstellt wird (210), wobei anlagenbezogene Knotentypen definiert werden (211), die jeweils einem speziellen Typ eines vorrichtungsspezifischen Objekts zugeordnet sind, wobei die herzustellende verfahrenstechnische Vorrichtung, ein Modul der verfahrenstechnischen Vorrichtung und eine Komponente der verfahrenstechnischen Vorrichtung jeweils ein vorrichtungsspezifisches Objekt darstellen, wobei als Teil des Anlagenmodells in der Datenbank wenigstens ein anlagenbezogener Datenknoten eines anlagenbezogenen Knotentyps erstellt wird (212), wobei einzelne anlagenbezogene Datenknoten des Anlagenmodells gemäß vorgegebenen Attributen des anlagenbezogenen Knotentyps miteinander verknüpft werden, wobei in den anlagenbezogenen Datenknoten Daten bezüglich der jeweiligen vorrichtungsspezifischen Objekte hinterlegt werden (230), die im Laufe des Herstellungsprozesses der verfahrenstechnischen Vorrichtung gesammelt werden, wobei für wenigstens einen anlagenbezogenen Datenknoten ein Wiederverwendungsgrad definiert wird, der ein Ausmaß beschreibt, zu welchem das von dem wenigstens einen anlagenbezogenen Datenknoten beschriebene vorrichtungsspezifische Objekt mit einem Standardobjekt des jeweiligen anlagenbezogenen Knotentyps übereinstimmt.

## Beschreibung

Die Erfindung betrifft ein Verfahren zum computerimplementierten Modellieren eines Herstellungsprozesses einer verfahrenstechnischen Vorrichtung sowie eine Recheneinheit und ein Computerprogramm zu dessen Durchführung.

### Stand der Technik

Als verfahrenstechnische Vorrichtung werden Apparate oder Anlagen zur Durchführung von Stoffänderungen und/oder Stoffumsetzungen mit Hilfe zweckgerichteter physikalischer und/oder chemischer und/oder biologischer und/oder nuklearer Wirkungsabläufe verstanden. Solche Änderungen und Umsetzungen umfassen typischerweise Zerkleinern, Sieben, Mischen, Wärmeübertragen, Rektifizieren, Kristallisieren, Trocknen, Abkühlen, Abfüllen und überlagerte Stoffumwandlungen, wie chemische, biologische oder nukleare Reaktionen. Beispielsweise kann es sich bei verfahrenstechnischen Vorrichtungen um eine verfahrenstechnische Anlage wie eine Luftzerlegungsanlage oder allgemein eine Fluidzerlegungsanlage handeln, welche Komponenten wie beispielsweise Wärmetauscher, Kolonnen, Behälter zur Phasentrennung usw. umfassen kann.

Im Zuge eines Herstellungsprozesses wird eine derartige verfahrenstechnische Vorrichtung gemäß einer vorgegebenen Auslegung an einem entsprechenden Standort konstruiert bzw. errichtet. Im Bereich des Bauwesens ist dabei der Begriff der EPC-Organisation (engl. "Engineering, Procurement and Construction") geläufig, welcher die Projektabwicklung zur Herstellung der verfahrenstechnischen Vorrichtung beschreibt. Ein entsprechender Auftragnehmer, der sog. EPC-Lieferant, verpflichtet sich, für den jeweiligen Auftraggeber die entsprechende verfahrenstechnische Vorrichtung herzustellen und hierfür alle notwendigen Leistungen zu erbringen, insbesondere die gesamte Ingenieurleistung ("Engineering"), die Beschaffung oder Fertigung aller notwendigen Baumaterialien und Bauteile ("Procurement") sowie die Montage auf der Baustelle ("Construction") bis zur schlüsselfertigen Inbetriebnahme. Im Zuge der Projektabwicklung obliegt es dabei dem EPC-Lieferanten, gegebenenfalls Komponenten für die herzustellende Vorrichtung von weiteren Entitäten zu beziehen, z.B. von weiteren Firmen bzw. Zulieferern.

Für die Effizienz derartiger Projektabwicklungen ist dabei ein umfassender Überblick über den aktuellen Zustand des Herstellungsprozesses von großer Bedeutung, insbesondere über den aktuellen Zustand der einzelnen Module und Komponenten der herzustellenden Vorrichtung. Eine Möglichkeit, den Herstellungsprozess nachvollziehbar dokumentieren zu können, wäre wünschenswert.

### Offenbarung der Erfindung

Erfindungsgemäß werden ein Verfahren zum computerimplementierten Modellieren eines Herstellungsprozesses einer verfahrenstechnischen Vorrichtung sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Im Rahmen des vorliegenden Verfahrens zum computerimplementierten Modellieren eines Herstellungsprozesses einer verfahrenstechnischen Vorrichtung wird ein Anlagenmodell bzw. ein Anlagendatenmodell in einer Datenbank erstellt, welches die herzustellende verfahrenstechnische Vorrichtung beschreibt bzw. abbildet.

Für das Anlagenmodell werden anlagenbezogene Knotentypen definiert, die jeweils einem speziellen Typ eines vorrichtungsspezifischen Objekts zugeordnet sind. Solche vorrichtungsspezifischen Objekte stellen die herzustellende verfahrenstechnische Vorrichtung selbst, ein Modul der verfahrenstechnischen Vorrichtung und eine Komponente der verfahrenstechnischen Vorrichtung dar. Die Vorrichtung ist aus den Modulen und Komponenten zusammengesetzt.

Als Teil des Anlagenmodells wird in der Datenbank wenigstens ein anlagenbezogener Datenknoten bzw. Datencontainer eines anlagenbezogenen Knotentyps erstellt. Jeder dieser anlagenbezogenen Datenknoten (sog. Instanzen) stellt jeweils ein vorrichtungsspezifisches Objekt des jeweiligen Typs dar. Einzelne anlagenbezogene Datenknoten des Anlagenmodells werden gemäß vorgegebenen Attributen des anlagenbezogenen Knotentyps miteinander verknüpft. In den anlagenbezogenen Datenknoten werden Daten bezüglich der jeweiligen vorrichtungsspezifischen Objekte hinterlegt, die im Laufe des Herstellungsprozesses der verfahrenstechnischen Vorrichtung gesammelt werden.

Die anlagenbezogenen Knotentypen beschreiben somit insbesondere im Allgemeinen jeweils den Typ bzw. die Klasse von in der herzustellenden Vorrichtung zu verbauenden Objekten, und die Datenknoten beschreiben zweckmäßigerweise jeweils im Speziellen die einzelnen zu verbauenden Objekte dieses speziellen Typs selbst. Beispielsweise für den Typ bzw. Knotentyp "Wärmetauscher" wird in dem Anlagenmodell für jeden in der verfahrenstechnischen Vorrichtung zu verbauenden Wärmetauscher zweckmäßigerweise jeweils ein entsprechender anlagenbezogener Datenknoten angelegt. Die anlagenbezogenen Datenknoten werden dann in Abhängigkeit von ihrem anlagenbezogenen Knotentyp mit anderen Datenknoten verbunden.

Diese anlagenbezogenen Datenknoten können die verfahrenstechnische Vorrichtung in ihrer Gesamtheit beschreiben und beispielsweise eine Topologie bzw. Funktionstopologie beschreiben oder beispielsweise den speziellen Standort, an welchem die verfahrenstechnische Vorrichtung errichtet werden soll. Ferner können die anlagenbezogenen Datenknoten Module oder Komponenten im Speziellen beschreiben, wobei als Komponenten in diesem Zusammenhang insbesondere einzelne Einheiten zu verstehen sind, z.B. einzelne Wärmetauscher, Pumpen, etc., und als Modul insbesondere ein Zusammenschluss bzw. Verbund mehrerer einzelner Einheiten zu einer übergeordneten Einheit.

Jeder Datenknoten wird im Laufe des Herstellungsprozesses mit den aktuellen Daten bezüglich des jeweiligen Objekts befüllt. Für jedes in der herzustellenden Vorrichtung zu verbauende Objekt werden somit entsprechende Daten in dem jeweiligen anlagenbezogenen Datenkonten hinterlegt und archiviert. Das Anlagenmodell ermöglicht es somit insbesondere, stets aktuelle Daten bzw. Informationen bezüglich des Herstellungsprozesses zu archivieren und zu dokumentieren, übersichtlich gegliedert nach Typen bzw. Knotentypen, also zweckmäßigerweise gegliedert bezüglich der gesamte Vorrichtung an sich im Allgemeinen oder gegliedert bezüglich einzelner Komponenten bzw. Module im Speziellen. Entsprechend kann im Anlagenmodell auf übersichtliche Weise nach den hinterlegten Daten gesucht werden, beispielsweise allgemein nach Attributen und Typen sowie im Speziellen nach konkreten vorrichtungsspezifischen Objekten.

Die vorliegende Erfindung stellt somit eine Möglichkeit zum Dokumentieren des Herstellungsprozesses der verfahrenstechnischen Vorrichtung bereit. Insbesondere kann anhand des Anlagenmodells der aktuelle Zustand bzw. Fortschritt des Herstellungsprozesses nachvollzogen, dokumentiert und überwacht werden. Anhand der Daten der einzelnen vorrichtungsspezifischen Objekte lässt sich insbesondere deren Zustand nachvollziehen und beispielsweise überprüfen, ob die jeweiligen Objekte bereits geliefert, montiert oder installiert wurden. Somit kann durch das Anlagenmodell stets ein umfassender Überblick über den aktuellen Zustand des Herstellungsprozesses gewonnen werden, so dass der Herstellungsprozess möglichst effektiv geplant, überwacht und durchgeführt werden kann.

Insbesondere kann dieses Anlagenmodell von allen an dem Herstellungsprozess beteiligten Entitäten wie unterschiedlichen Baufirmen oder Zulieferern gleichermaßen genutzt werden und jede Entitäten kann entsprechende von ihr bereitgestellte Daten in das Anlagenmodell einpflegen. Alternativ können auch die Daten sämtlicher Entitäten von einer übergeordneten Entität gesammelt werden, beispielsweise von einem EPC-Lieferant, welche die Daten in das Anlagenmodell einpflegt.

Weiterhin wird für wenigstens einen anlagenbezogenen Datenknoten ein Wiederverwendungsgrad definiert, der ein Ausmaß beschreibt, zu welchem das von dem wenigstens einen anlagenbezogenen Datenknoten repräsentierte vorrichtungsspezifische Objekt mit einem Standardobjekt des jeweiligen anlagenbezogenen Knotentyps übereinstimmt.

Dadurch kann ein Portfolio an Datenknotentypen bereitgestellt werden, aus denen im jeweiligen Einzelfall diejenigen ausgewählt werden, die für die zugrunde liegende Anlage gebraucht werden. Mit anderen Worten können die Knotentypen, sobald sie einmal definiert wurden, insbesondere vorrichtungsübergreifend für verschiedene verfahrenstechnische Vorrichtungen verwendet werden. Ein Standardobjekt eines Knotentyps kann beispielsweise durch Verwendung früherer Daten definiert werden. Wenn für andere verfahrenstechnische Vorrichtungen spezielle vorrichtungsspezifische Objekte bereits verbaut wurden, können die entsprechenden Daten in das Standardobjekt eines Knotentyps eingepflegt werden. Somit können für den Herstellungsprozess verfahrenstechnischer Vorrichtungen Daten aus bereits durchgeführten Herstellungsprozessen, z.B. aus Vorgängerprojekten, zur Verfügung gestellt werden.

Beispielsweise kann der Wiederverwendungsgrad als "fix" vorgegeben sein, was insbesondere bedeutet, dass das jeweilige vorrichtungsspezifische Objekt dem Standardobjekt des Knotentyps vollständig entspricht, z.B. ein gängiges, standardmäßiges Objekt ist, welches mit großer Häufigkeit und somit einer hohen Wiederverwendung in weiteren verfahrenstechnischen Vorrichtungen verwendet wird. Der Wiederverwendungsgrad kann beispielsweise auch als "ähnlich" vorgegeben werden, wonach das jeweilige vorrichtungsspezifische Objekt dem Standardobjekt des Knotentyps im Wesentlichen entspricht, weil z.B. ein ähnliches vorrichtungsspezifisches Objekt bereits in weiteren verfahrenstechnischen Vorrichtungen verbaut wurde, welches mit nur leichten Modifikationen für die aktuelle verfahrenstechnische Vorrichtung verwendet werden kann. Ferner kann der Wiederverwendungsgrad beispielsweise auch als "projektspezifisch" vorbegeben werden, gemäß welchem das jeweilige vorrichtungsspezifische Objekt für ein spezielles Bauprojekt individuell ist.

Insbesondere kann der Wiederverwendungsgrad jeweils mit einem Herstellungszustand des jeweiligen anlagenbezogenen Datenknotens verknüpft werden. Einem vorrichtungsspezifischen Objekt, welches den Wiederverwendungsgrad "fix" erhalten hat, kann der Zustand "issued for manufacturing" zugewiesen werden, wonach das jeweilige vorrichtungsspezifische Objekt beispielsweise ohne weitere Modifikationen standardgemäß in der aktuellen verfahrenstechnischen Vorrichtung verbaut werden kann.

Vorzugsweise wird für wenigstens einen anlagenbezogenen Knotentyp wenigstens ein verknüpfter zusätzlicher Knotentyp erstellt, welcher zusätzliche Eigenschaften des jeweiligen vorrichtungsspezifischen Objekts beschreibt. Insbesondere werden somit einzelne oder alle anlagenbezogenen Knotentypen mit wenigstens einem zusätzlichen Knotentyp verknüpft, welcher im Folgenden als Variant-Knotentyp bezeichnet wird. Entsprechend kann für die anlagenbezogenen Datenknoten dieses jeweiligen anlagenbezogenen Knotentyps wenigstens ein verknüpfter zusätzlicher Datenknoten bzw. Variant-Datenknoten erstellt werden. Beispielsweise können in dem Variant-Knotentyp Attribute gepflegt werden, welche zur eindeutigen Beschreibung des verfahrenstechnischen Objekts benötigt werden, welche aber beispielsweis keinen Einfluss auf Beziehungen zu anderen Knotentypen haben.

Gemäß einer vorteilhaften Ausführungsform beschreiben die anlagenbezogenen Knotentypen des Anlagenmodells jeweils einen Zustand bzw. eine Klasse und/oder Eigenschaften des speziellen Typs des vorrichtungsspezifischen Objekts. Der Zustand bzw. die Klasse des Knotentyps können insbesondere einen Status des jeweiligen Typs an vorrichtungsspezifischen Objekten beschreiben und/oder eine Ausgabe und/oder ein Erstellungsdatum der Ausgabe. Die Eigenschaften können insbesondere als Tabellen hinterlegt sein, beispielsweise als Komponententabellen, in denen Daten zu Eigenschaften des vorrichtungsspezifischen Objektes (z.B. Stutzen- oder Sektionsdaten) abgelegt werden können, oder beispielsweise als Anforderungstabellen, in denen die verfahrenstechnischen Anforderungen in Form von Daten zugeordneter Prozessströme oder auch über einzelne Sachmerkmale, abgelegt werden können.

Vorteilhafterweise beschreibt der Zustand eine Entwicklungsstufe bzw. einen Status des speziellen Typs des vorrichtungsspezifischen Objekts. So kann dieser Status bzw. diese Entwicklungsstufe beispielsweise angeben, ob der entsprechende Typ sich in einer frühen Planungsphase befindet ("issued for proposal"), in einer Entwicklungs- bzw. Designphase ("issued for design"), bereits bestellt werden kann ("issued for order") oder verbaut werden kann ("issued for manufacturing").

Gemäß einer besonders bevorzugten Ausführungsform wird ein Organisationsmodell bzw. Organisationsdatenmodell in der Datenbank erstellt, welches den Herstellungsprozess der verfahrenstechnischen Vorrichtung beschreibt. Somit erfolgt das Modellieren des Herstellungsprozesses der verfahrenstechnischen Vorrichtung vorteilhafterweise mit Hilfe zweier einzelner Modelle, nämlich mittels des Anlagenmodells, welches die verfahrenstechnische Vorrichtung und ihre Module bzw. Komponenten an sich betrifft, sowie ferner mittels des Organisationsmodells, welches den Herstellungsprozess an sich betrifft, insbesondere im Zuge des Herstellungsprozess durchzuführende Tätigkeiten und ferner insbesondere die an dem Herstellungsprozess beteiligten Entitäten.

Das Organisationsmodell ist zweckmäßigerweise entsprechend dem Anlagenmodell aus Datenknoten bestimmter Knotentypen aufgebaut. Vorzugsweise werden für das Organisationsmodell organisationsbezogene Knotentypen definiert, die jeweils einem speziellen Typ eines herstellungsspezifischen Objekts zugeordnet sind. Solche herstellungsspezifische Objekte stellen eine Tätigkeit und/oder eine Organisation des Herstellungsprozesses der verfahrenstechnischen Vorrichtung dar. Bevorzugt wird als Teil des Organisationsmodells in der Datenbank wenigstens ein organisationsbezogener Datenknoten eines organisationsbezogenen Knotentyps erstellt, wobei jeder dieser organisationsbezogenen Datenknoten (sog. Instanzen) jeweils ein organisationsbezogenes Objekt des jeweiligen Typs darstellt und wobei einzelne organisationsbezogene Knotentypen des Organisationsmodells gemäß vorgegebener Attribute des organisationsbezogenen Knotentyps miteinander verknüpft werden. Vorteilhafterweise werden in den organisationsbezogenen Datenknoten des Organisationsmodells Daten bezüglich der jeweiligen herstellungsspezifischen Objekte hinterlegt, die im Laufe des Herstellungsprozesses der verfahrenstechnischen Vorrichtung gesammelt werden.

Die vorrichtungsspezifischen Objekte sowie die entsprechenden anlagenbezogenen Datenknoten und anlagenbezogenen Knotentypen des Anlagenmodells betreffen somit insbesondere Eigenschaften und Zustände der verfahrenstechnischen Vorrichtung an sich. Die herstellungsspezifischen Objekte und die entsprechenden organisationsbezogenen Datenknoten und organisationsbezogenen Knotentypen des Organisationsmodells betreffen zweckmäßigerweise Organisation, Arbeitsschritte und Arbeitsabläufe des Herstellungsprozesses.

Die obig erläuterten Merkmale und bevorzugte Ausführungsformen in Bezug auf die anlagenbezogenen Knotentypen und anlagenbezogenen Datenknoten des Anlagenmodells sollen insbesondere in entsprechender Weise für die organisationsbezogenen Knotentypen und organisationsbezogenen Datenknoten des Organisationsmodells gelten.

Zweckmäßigerweise beschreiben die organisationsbezogenen Knotentypen des Organisationsmodells jeweils einen Zustand und/oder Eigenschaften des speziellen Typs des herstellungsspezifischen Objekts. Auch diese Eigenschaften können insbesondere in Form von Tabellen hinterlegt sein, in denen Daten zu Eigenschaften herstellungsspezifischen Objektes abgelegt werden können.

Auch für jeden organisationsbezogenen Datenknoten wird zweckmäßigerweise ein Wiederverwendungsgrad definiert, der ein Ausmaß beschreibt, zu welchem das von dem wenigstens einen organisationsbezogenen Datenknoten repräsentierte herstellungsspezifische Objekt mit einem Standardobjekt des jeweiligen organisationsbezogenen Knotentyps übereinstimmt. Beispielsweise kann dieser Wiederverwendungsgrad angeben, wie standardgemäß eine entsprechende Tätigkeit durchgeführt wird.

Für wenigstens einen organisationsbezogenen Knotentyp wird zweckmäßigerweise wenigstens ein verknüpfter zusätzlicher Knotentyp bzw. Variant-Knotentyp erstellt, welcher zusätzliche Eigenschaften des jeweiligen herstellungsspezifischen Objekts beschreibt.

Vorteilhafterweise führt eine Veränderung eines organisationsbezogenen Datenknotens des Organisationsmodells, dessen Typ eine Tätigkeit des Herstellungsprozesses charakterisiert, zu einer Veränderung von anlagenbezogenen Knotentypen des Anlagenmodells und/oder von organisationsbezogenen Knotentypen des Organisationsmodells, welche mit dem Typ dieses veränderten organisationsbezogenen Datenknotens des Organisationsmodells verknüpft sind. Wenn also eine entsprechende Tätigkeit im Zuge des Herstellungsprozesses durchgeführt wurde, werden auch die entsprechenden Datenknoten verändert, welche durch diese Tätigkeit beeinflusst werden. Das Anlagenmodell und das Organisationsmodell sind insbesondere so aufgebaut, dass sich in dem Organisationsmodell die als organisationsbezogene Datenknoten repräsentierten Aktivitäten ("Aktivitätsdatenknoten") auf definierte anlagenbezogene Knotentypen des Anlagenmodells und/oder auf definierte organisationsbezogene Knotentypen des Organisationsmodells beziehen. Aktivitäten verändern insbesondere den Status eines Knotentyps. Manche Aktivitätsdatenknoten können sich insbesondere nur auf bestimmte Klassen und Unterklassen eines Knotentyps beziehen. Insbesondere kann die Ausprägung von Aktivitätsdatenknoten im Organisationsmodell abhängig vom Wiederverwendungsgrad des in Beziehung stehenden anlagenbezogenen Knotentyps aus dem Anlagenmodell sein.

Bevorzugt verknüpft ein spezieller Datenknoten das Anlagenmodell mit dem Organisationsmodell. Dieser spezielle Datenknoten charakterisiert bevorzugt einen Lieferumfang (engl. "Supply Scope") als vorrichtungsspezifisches Objekt. Insbesondere charakterisiert dieser spezielle Datenknoten bzw. Lieferumfang-Datenknoten ("Supply Scope" Datenknoten) Informationen über eine oder mehrere Entitäten, welche die einzelnen vorrichtungsspezifischen Objekte der verfahrenstechnischen Vorrichtung designt, beschafft und montiert. Der Lieferumfang der beteiligten Entitäten auf Kunden und Auftragsnehmerseite wird somit insbesondere auf diesem Lieferumfang-Datenknoten und seinem Variant-Datenknoten im Projektkontext eindeutig definiert. Eintragungen auf dem Lieferumfang-Datenknoten und seinem Variant-Datenknoten steuern insbesondere über Arbeitspaket und Arbeitsschritt verknüpfte Arbeitsaktivitäten im Organisationsmodell.

Vorzugsweise wird für verschiedene an dem Herstellungsprozess der verfahrenstechnischen Vorrichtung beteiligte Entitäten jeweils ein Organisationsmodell in der Datenbank erstellt. Zur Pflege von Abwicklungsmodellen, in denen mehrere Entitäten einer Organisation involviert sind, ist es sinnvoll, die Organisationmodelle dieser Entitäten in einem computerimplementierten Raum bzw. Projektraum (als logische Zuordnungsgruppe) oder einer computerimplementierten Datenbank zu pflegen. Für andere Organisationsentitäten kann auch entschieden werden, sie in eigenen computerimplementierten Räumen, Projekträumen bzw. Datenbanken zu pflegen, um Wechselwirkungen bei Abweichungen oder Änderungen im Organisationsmodell zu vermeiden.

Vorteilhafterweise ist die verfahrenstechnische Vorrichtung eine verfahrenstechnische Anlage oder zumindest eine Komponente einer verfahrenstechnischen Anlage. Als eine verfahrenstechnische Vorrichtung sei in diesem Zusammenhang somit insbesondere eine Einheit oder ein System verschiedener Einheiten zum Ausführen eines verfahrenstechnischen Prozesses zu verstehen, ferner insbesondere ein Apparat oder eine Anlage zur Durchführung von Stoffänderungen und/oder Stoffumsetzungen mit Hilfe zweckgerichteter physikalischer und/oder chemischer und/oder biologischer und/oder nuklearer Wirkungsabläufe. Solche Änderungen und Umsetzungen umfassen typischerweise Zerkleinern, Sieben, Mischen, Wärmeübertragen, Rektifizieren, Kristallisieren, Trocknen, Abkühlen, Abfüllen und überlagerte Stoffumwandlungen, wie chemische, biologische oder nukleare Reaktionen.

Vorteilhafterweise ist die verfahrenstechnische Vorrichtung eine verfahrenstechnische Anlage, insbesondere zur Trennung und/oder Verflüssigung von Gasen, beispielsweise eine Luftzerlegungsanlage oder allgemein eine Fluidzerlegungsanlage sein, eine Erdgasanlage, eine Wasserstoff- und Synthesegasanlage, eine Adsorptions- und Membrananlage, z.B. eine Druckwechseladsorptionsanlage, oder eine kryotechnische Anlage, z.B. zur Kühlung von Supraleitern und kalten Neutronenquellen, MRTs, Fusions- und Fissionsanwendungen oder bei der Verflüssigung von Helium und Wasserstoff.

Ferner kann es sich bei der verfahrenstechnischen Vorrichtung zweckmäßigerweise um eine Komponente handeln, die in einer derartigen Anlage verwendet wird, ferner insbesondere um einen fluiddurchströmten verfahrenstechnischen Apparat. Vorteilhafterweise ist die verfahrenstechnische Vorrichtung ein Wärmetauscher, z.B. ein Plattenwärmetauscher oder ein spiralgewickelter Wärmetauscher, oder eine Kolonne (hohle, schlanke Säule mit Einbauten) oder ein Phasentrennapparat bzw. Behälter zur Phasentrennung (Behälter mit Einbauten).

Eine erfindungsgemäße Recheneinheit ist, insbesondere programmtechnisch, dazu eingerichtet, ein erfindungsgemäßes Verfahren durchzuführen.

Auch die Implementierung der Erfindung in Form von Software ist vorteilhaft, da dies besonders geringe Kosten ermöglicht, insbesondere wenn eine ausführende Recheneinheit noch für weitere Aufgaben genutzt wird und daher ohnehin vorhanden ist. Geeignete Datenträger zur Bereitstellung des Computerprogramms sind insbesondere magnetische, elektrische und optische Datenträger, wie Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt schematisch eine verfahrenstechnische Vorrichtung, deren Herstellungsprozess im Zuge einer bevorzugten Ausführungsform eines erfindungsgemäßen Verfahrens modelliert werden kann.
- Figur 2: zeigt schematisch eine bevorzugte Ausführungsform eines erfindungsgemäßen Verfahrens als ein Blockdiagramm.

### Detaillierte Beschreibung der Zeichnung

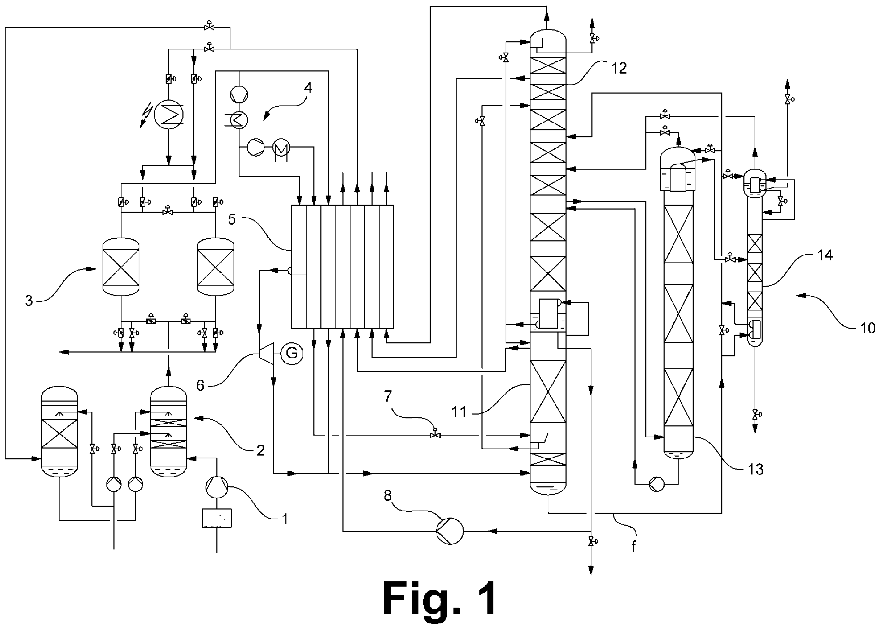

In Figur 1 ist eine verfahrenstechnische Vorrichtung in Form einer Luftzerlegungsanlage schematisch dargestellt, welche im Zuge einer bevorzugten Ausführungsform eines erfindungsgemäßen Verfahrens modelliert und betrieben werden kann.

Die Luftzerlegungsanlage verfügt unter anderem über einen Hauptluftverdichter 1, eine Vorkühleinrichtung 2, ein Reinigungssystem 3, eine Nachverdichteranordnung 4, einen Hauptwärmeübertrager 5, eine Entspannungsturbine 6, eine Drosseleinrichtung 7, eine Pumpe 8 und ein Destillationssäulensystem 10. Das Destillationssäulensystem 10 umfasst im dargestellten Beispiel eine klassische Doppelsäulenanordnung aus einer Hochdrucksäule 11 und einer Niederdrucksäule 12 sowie eine Rohargonsäule 13 und eine Reinargonsäule 14.

In der Luftzerlegungsanlage wird im Zuge einer Luftzerlegung ein Einsatzluftstrom mittels des Hauptluftverdichters 1 über ein nicht bezeichnetes Filterelement angesaugt und verdichtet. Der verdichtete Einsatzluftstrom wird der mit Kühlwasser betriebenen Vorkühleinrichtung 2 zugeführt. Der vorgekühlte Einsatzluftstrom wird in dem Reinigungssystem 3 aufgereinigt. In dem Reinigungssystem 3, das typischerweise ein Paar von im Wechselbetrieb eingesetzten Adsorberbehältern umfasst, wird der vorgekühlte Einsatzluftstrom weitgehend von Wasser und Kohlendioxid befreit.

Stromab des Reinigungssystems 3 wird der Einsatzluftstrom in zwei Teilströme aufgeteilt. Einer der Teilströme wird auf dem Druckniveau des Einsatzluftstroms in dem Hauptwärmeübertrager 5 vollständig abgekühlt. Der andere Teilstrom wird in der Nachverdichteranordnung 4 nachverdichtet und ebenfalls in dem Hauptwärmeübertrager 5 abgekühlt, jedoch nur auf ein Zwischentemperaturniveau. Ein Teil dieses Stroms, der sogenannte Turbinenstrom, wird nach der Abkühlung auf das Zwischentemperaturniveau mittels der Entspannungsturbine 6 auf das Druckniveau des vollständig abgekühlten Teilstroms entspannt, mit diesem vereinigt, und in die Hochdrucksäule 11 eingespeist.

In der Hochdrucksäule 11 werden eine sauerstoffangereicherte flüssige Sumpffraktion sowie eine stickstoffangereicherte gasförmige Kopffraktion gebildet. Die sauerstoffangereicherte flüssige Sumpffraktion wird aus der Hochdrucksäule 11 abgezogen, teilweise als Heizmedium in einem Sumpfverdampfer der Reinargonsäule 14 verwendet und jeweils in definierten Anteilen in einen Kopfkondensator der Reinargonsäule 14, einen Kopfkondensator der Rohargonsäule 13 sowie die Niederdrucksäule 12 eingespeist. In den Verdampfungsräumen der Kopfkondensatoren der Rohargonsäule 13 und der Reinargonsäule 14 verdampfendes Fluid wird ebenfalls in die Niederdrucksäule 12 überführt.

Vom Kopf der Hochdrucksäule 11 wird das gasförmige stickstoffreiche Kopfprodukt abgezogen, in einem Hauptkondensator, der eine wärmetauschende Verbindung zwischen der Hochdrucksäule 11 und der Niederdrucksäule 12 herstellt, verflüssigt, und in Anteilen als Rücklauf auf die Hochdrucksäule 11 aufgegeben und in die Niederdrucksäule 12 entspannt.

In der Niederdrucksäule 12 werden eine sauerstoffreiche flüssige Sumpffraktion sowie eine stickstoffreiche gasförmige Kopffraktion gebildet. Erstere wird teilweise in der Pumpe 8 flüssig auf Druck gebracht, in dem Hauptwärmeübertrager 5 erwärmt, und als Produkt bereitgestellt. Aus einer Flüssigkeitsrückhalteeinrichtung am Kopf der Niederdrucksäule 12 wird ein flüssiger stickstoffreicher Strom abgezogen und als Flüssigstickstoffprodukt aus der Luftzerlegungsanlage ausgeführt werden. Ein vom Kopf der Niederdrucksäule 12 abgezogener gasförmiger stickstoffreicher Strom wird durch den Hauptwärmeübertrager 5 geführt und als Stickstoffprodukt auf dem Druck der Niederdrucksäule 12 bereitgestellt. Aus der Niederdrucksäule 12 wird ferner ein Strom aus einem oberen Bereich abgezogen und nach Erwärmung in dem Hauptwärmeübertrager 5 als sogenannter Unreinstickstoff in der Vorkühleinrichtung 2 bzw. nach einer Aufheizung mittels eines elektrischen Heizers in dem Reinigungssystem 3 verwendet.

Insgesamt wird der Kolonne bzw. der Niederdrucksäule 12 im Zuge der Luftzerlegung Luft (AIR) zugeführt und zumindest Sauerstoff und Stickstoff jeweils gasförmig (GOX, GAN) und/oder flüssig (LOX, LIN) entnommen. Weiterhin wird üblicherweise Unreinstickstoff (UN2) abgezogen und gewünschtenfalls Edelgase wie Argon usw.

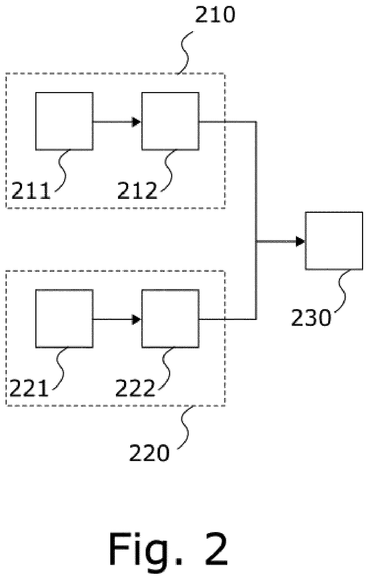

In Figur 2 ist schematisch eine bevorzugte Ausführungsform eines erfindungsgemäßen Verfahrens als ein Blockdiagramm dargestellt, im Zuge dessen im vorliegenden Beispiel der Herstellungsprozess einer Luftzerlegungsanlage, wie sie in Figur 1 dargestellt ist, modelliert, d.h. datenverarbeitungstechnisch nachgebildet wird.

Im Zuge des Herstellungsprozesses soll die verfahrenstechnische Vorrichtung gemäß einer vorgegebenen Auslegung an einem entsprechenden Standort konstruiert bzw. errichtet werden, beispielsweise im Zuge einer sog EPC-Organisation (engl. "Engineering, Procurement and Construction"). Um diese Projektabwicklung möglichst effizient zu gestalten, wird der Herstellungsprozess im Rahmen einer bevorzugten Ausführungsform des erfindungsgemäßen Verfahrens modelliert, um einen umfassenden Überblick über den aktuellen Zustand des Herstellungsprozesses, insbesondere über den aktuellen Zustand der einzelnen Module und Komponenten der herzustellenden Vorrichtung zu gewährleisten.

Im Rahmen des Verfahrens wird in Schritt 210 ein Anlagenmodell in einer Datenbank erstellt. Zu diesem Zweck werden in einem ersten Schritt 211 in dem verwendeten Datenbanksystem, z.B. SAP-PSM ("product structure management"), anlagenbezogene Knotentypen definiert, die jeweils einem speziellen Typ eines vorrichtungsspezifischen Objekts zugeordnet sind, wobei die herzustellende verfahrenstechnische Vorrichtung, ein Modul der verfahrenstechnischen Vorrichtung und eine Komponente der verfahrenstechnischen Vorrichtung jeweils ein vorrichtungsspezifisches Objekt darstellen. Ferner werden Attribute vorgegeben, gemäß welchen einzelne anlagenbezogene Datenknoten bzw. anlagenbezogene Knotentypen zu verknüpfen sind.

Anlagenbezogene Knotentypen sind z.B. Anlagenkonzept (PC), Modulkonzept (MC), Komponentenkonzept (EC), Prozesstopologie (TP), Baugruppen- (TS) und Komponententopologie (TE). Der Knotentyp PC kann eine Verbindung zu einem Knotentyp MC und TP in Form von "enthält" eingehen. Analoges gilt für die Verknüpfung MC-EC sowie die Verknüpfungen TP-TS-TE. Eine andere Art der Verknüpfung besteht zwischen TE-EC. Durch diese Verknüpfung stehen zwei anlagenbezogene Knotentypen in Beziehung, die das gleiche vorrichtungsspezifische Objekt, aber in unterschiedlicher Detailtiefe beschreiben. Auf dem Knotentyp TE werden z.B. Attribute wie der innere Aufbau, Art und Anzahl der die Komponente aufbauenden Sektionen und die Art der Anschlüsse, z.B. Stutzen, definiert. Der mit dem anlagenbezogene Knotentyp TE verknüpfte anlagenbezogene Knotentyp EC führt größenbehaftete Attribute, wie z.B. Durchmesser, Länge etc.

In einem zweiten Schritt 212 werden Instanzen, die eigentlichen anlagenbezogenen Datenknoten eines anlagenbezogenen Knotentyps, in einem definierten Raum erzeugt.

Ein definierter Raum kann z.B. ein Projekt mit einer Projektnummer P-1001 sein, in dem das vorrichtungsspezifische Objekt mit der Identifikation D-01 (Behälter mit der ID D-01) projektspezifisch ausgelegt und berechnet werden soll. In diesem Fall wird für das Objekt D-01 im Projektraum P-1001 ein anlagenbezogener Knoten des Typs EC erzeugt, auf dem die projektspezifischen Daten des Objektes D-01 gespeichert werden.

Für standardisierte vorrichtungsspezifische Objekte wie z.B. einer Standardbaureihe von Behältern D-01 mit den 10 festgelegten Durchmessern DN100, DN200, ...DN1000 können 10 einzelne Knoten EC-1,.., EC-10 des Knotentyps EC in einem eigenen Raum, dem Produkt-Portfolioraum, erzeugt werden.

Diese anlagenbezogenen Knoten werden entsprechend ihren Eigenschaften bzw. den vorgegebenen Attributen miteinander verknüpft. Ob eine Beziehung zwischen einzelnen Objekten besteht, hängt von einer begrenzten Zahl von Attributen ab. Diese begrenzte Zahl an Attributen wird dem anlagenbezogenen Datenknoten zugeordnet. Weitere Attribute, die zur eindeutigen Beschreibung des Objektes notwendig sind, aber keinen Einfluss auf die Beziehung haben, werden auf einem Variant-Knotentyp gepflegt.

Auf einem bestimmten anlagenbezogenen Knoten EC-1 des anlagenbezogenen Knotentyps EC werden z.B. die Außenabmessungen einer Komponente gepflegt. Die Außenabmessungen entscheiden u.a. darüber, ob diese Komponente in einem bestimmten Modul MC-1 des anlagenbezogenen Knotentyps MC verwendet werden kann. Dieser Knoten EC-1 kann mit einem oder mehreren Knoten EC-1-V1, ...Vn des Variant-Knotentyps ECV verknüpft sein. Auf den Knoten EC-1-Vi des Variant-Knotentyps ECV werden Attribute wie z.B. Geometrien von Einbauten gepflegt. Alle Komponenten, deren Außenabmessungen über EC-1 beschrieben werden, können unabhängig von den Attributen auf den zugehörigen EC-1-Vi Knoten im Modul MC-1 verwendet werden.

Auf entsprechende Weise wird in Schritt 220 ein Organisationsmodell in der Datenbank erstellt, welches den Herstellungsprozess der verfahrenstechnischen Vorrichtung beschreibt. Entsprechend werden in einem ersten Schritt 221 organisationsbezogene Knotentypen definiert, die zur Beschreibung des Herstellungsprozess der verfahrenstechnischen Vorrichtung benötigt werden. Diese organisationsbezogenen Knotentypen sind z.B. die Organisation (organisationsbezogener Knotentyp OG), mit ihren Entitäten (organisationsbezogener Knotentyp "EN"), den Geschäftsbereichen (organisationsbezogener Knotentyp "BU"), Organisationseinheiten (organisationsbezogener Knotentyp "OU"), Rollen (organisationsbezogener Knotentyp "RO"), Arbeitspaketen (organisationsbezogener Knotentyp "WP"), Arbeitsschritten (organisationsbezogener Knotentyp "WS") und Tätigkeiten (organisationsbezogener Knotentyp "WA"). Einzelne Tätigkeiten WAi des organisationsbezogenen Knotentyps "WA" werden jeweils einem speziellen Typ eines herstellungsspezifischen Objekts zugeordnet. Entsprechend werden Attribute vorgegeben, gemäß welchen einzelne organisationsbezogene Datenknoten bzw. organisationsbezogene Knotentypen zu verknüpfen sind.

In Schritt 222 wird als Teil des Organisationsmodells wenigstens ein organisationsbezogener Datenknoten eines organisationsbezogenen Knotentyps erstellt. Einzelne organisationsbezogene Datenknoten werden gemäß den vorgegebenen Attributen miteinander verknüpft.

Die Tätigkeit WA-1 "Definition der verfahrenstechnischen Anforderung für einen Behälter", die dem herstellungsspezifischen Objekt des organisationsbezogenen Knotentyps "EC" zugeordnet ist, wird in der Entität EN-1, von einer Organisationseinheit OU-2, die zu dem Geschäftsbereich BU-3 gehört, durchgeführt. Dieser Sachverhalt wird durch die Beziehungen EN-1 -> BU-3 -> OU-2 -> WA-1 wiedergegeben.

In einem Schritt 230 werden die anlagenbezogenen Datenknoten des Anlagenmodells und die organisationsbezogenen Datenknoten des Organisationsmodells mit Daten befüllt. Diese Daten zu einem Datenknoten können unabhängig von einem Abwicklungsprojekt, während der Abwicklung eines Projektes oder im Anschluss nach einem Projekt befüllt werden.

Im Anlagenmodell werden technische Daten wie Anforderungen durch Prozessströme, Ausführungsformen, Dimensionen, Materialeigenschaften, Prüfvorschriften hinterlegt. Im Organisationsmodell ist die Auf- und Ablauforganisation, die für den Herstellungsprozess relevanten Werke und Herstellungseinrichtungen hinterlegt.

Für die anlagenbezogenen bzw. organisationsbezogenen Datenknoten des Anlagenmodells und des Organisationsmodells wird jeweils ein Wiederverwendungsgrad definiert, der ein Ausmaß beschreibt, zu welchem das von dem jeweiligen Datenknoten repräsentierte vorrichtungsspezifische bzw. herstellungsspezifische Objekt mit einem Standardobjekt des jeweiligen Knotentyps übereinstimmt. Dadurch wird ein Portfolio an Datenknotentypen bereitgestellt, aus denen diejenigen ausgewählt werden, die für die zugrunde liegende Anlage gebraucht werden. Ein Standardobjekt eines Knotentyps kann beispielsweise durch Verwendung früherer Daten definiert werden.

Zur Beschreibung eines vorrichtungsspezifischen bzw. herstellungsspezifischen Objektes durch einen entsprechenden Knotentyp werden den Knotentypen jeweils Klassen (ggf. auch Unterklassen) und Tabellen zugeordnet. Die Grundklasse eines Knotentyps beinhaltet z.B. den Status, die Ausgabe und das Erstellungsdatum der Ausgabe. Beispiele für den Status können eine Planungsphase ("issued for proposal"), eine Entwicklungs- bzw. Designphase ("issued for design"), ein Bestellphase ("issued for order") oder eine Installationsphase ("issued for manufacturing") sein. Mögliche Tabellen sind Komponententabellen, in denen Daten zu Eigenschaften des Objektes abgelegt werden können, und/oder Anforderungstabellen, in denen die verfahrenstechnischen Anforderungen in Form von Daten zugeordneter Prozessströme oder auch über einzelne Sachmerkmale, abgelegt werden können.

In der Komponententabelle werden z.B. die Stutzendurchmesser, Höhenlage der Stutzen, Orientierung der Stutzen und deren Wandstärke hinterlegt. In der Anforderungstabelle werden z.B. der Mengenstrom, der Druck, die Temperatur, Zusammensetzung der in das zu beschreibende Objekt ein- und austretenden Ströme abgelegt. Als weitere Anforderungen können in der Anforderungstabelle z.B. maximale Transportabmessungen, Mindestfilteranforderungen hinterlegt werden.

Beispielsweise können die anlagenbezogenen Datenknoten und anlagenbezogenen Knotentypen des Anlagenmodells drei verschiedene Ebenen repräsentieren, eine Anlagenebene, eine Modulebene und eine Komponentenebene. Die verfahrenstechnische Vorrichtung kann in ihrer Gesamtheit beispielsweise mit einem Anlagenfunktionstopologie-Datenknoten (TP) und einem Anlagenkonzept-Datenknoten (PC) beschrieben werden. Dieser Anlagenfunktionstopologie-Datenknoten kann beispielsweise funktionale Module bzw. rein funktionale Einheiten der verfahrenstechnischen Vorrichtung und ihre Verknüpfungen beschreiben. Der Anlagenkonzept-Datenknoten kann Leistungsdaten der verfahrenstechnischen Vorrichtung beschreiben. Ein Anlagenländertyp-Datenknoten (PT) kann beispielsweise länderspezifische Merkmale des Aufstellungsortes der herzustellenden verfahrenstechnischen Vorrichtung beschreiben. Ein Montageort-Datenknoten (CA) kann Informationen über Montagesequenzen und Logistikorte beschreiben.

Durch einen Anlagenfunktionstopologie-Datenknoten (TP) wird z.B. eine bestimmte Ausführungsform des Kälteerzeugungsprozesses in einer Luftzerlegungsanlage beschrieben. Der Anlagenkonzept-Datenknoten (PC) beschreibt z.B. eine Luftzerlegungsanlage als eine Größenklasse mit einer spezifischen Konfiguration an Ausführungsformen der benötigten Funktionstopologien (Luftverdichtung, Vorkühlung, Luftreinigung, Kälteerzeugung und Rektifikation). Durch den zugeordneten Anlagenländertyp-Datenknoten (PT) wird die verfahrenstechnisch gleiche Anlage in ihrer mechanischen Ausprägung beschrieben. Zur Koordination der Montage einer Anlage wird diese in sogenannte Baufelder unterteilt. Diese Baufelder werden durch den Montageort-Datenknoten (CA) beschrieben.

Module können beispielsweise durch einen Modultopologie-Datenknoten (TM), einen Modulkonzept-Datenknoten (MC) und einen Modulfit-Datenknoten (MF) beschrieben werden. Funktionale Module werden insbesondere durch Funktionsmodultopologie-Datenknoten (TS) beschrieben. Der Modultopologie-Datenknoten definiert insbesondere äußere Anschlüsse eines Moduls und aus welchen Komponenten das Modul aufgebaut ist. Der Modulkonzept-Datenknoten beinhaltet insbesondere äußere Dimensionen, dazugehörige Komponentenkonzepte und beschreibenden Leistungsdaten des Moduls. Der Modulfit-Datenknoten beschreibt insbesondere das Modul und seine Komponenten in ihrer dreidimensionalen, mechanischen, fertigbaren Form. Informationen für die Bestellung von Engineering, Montage und Material für Module werden insbesondere in Einkaufspaket-Datenknoten (PP) hinterlegt.

Wärmetauscher-, Rektifikations-Coldboxen oder Pumpenskids stellen Module dar. Sie werden durch jeweils einen Modultopologie-Datenknoten (TM), Modulkonzept-Datenknoten (MC) und einen Modulfit-Datenknoten (MF) beschrieben. Mittels des TM-Knoten wird z.B. beschrieben, aus welchen verfahrenstechnischen und mechanischen Komponenten das Modul besteht. Der MC-Knoten beschreibt die Eigenschaften dieses Moduls, die zur Erfüllung verfahrens- und prozesstechnischer Aufgaben relevant sind. Der MF-Knoten beschreibt die mechanischen Eigenschaften dieses Moduls. Mechanisch unterschiedlich ausgeführte Module können die gleichen verfahrens- und prozesstechnischen Aufgaben erfüllen. Bestellungen von Dienstleistungen und Gütern können nach Warengruppen unterschieden werden. Je nach Warengruppe und Einkaufsmarkt können diese Bestellungen von unterschiedlichen Organisationseinheiten durchgeführt. Ein Einkaufspaket-Datenknoten (PP) bündelt z.B. alle Bestellungen einer Warengruppe, die von einer bestimmten Organisationseinheit auszuführen sind.

Für die Komponenten sind insbesondere ein Komponententopologie-Datenknoten (TE), ein Komponentenkonzept-Datenknoten (EC) und ein Komponentenfit-Datenknoten (EF) vorgesehen. Der Komponententopologie-Datenknoten definiert insbesondere äußere Anschlüsse und innere Struktur einer Komponente, der Komponentenkonzept-Datenknoten insbesondere äußere Dimensionen und Leistungsdaten der Komponente. Der Komponentenfit-Datenknoten beschreibt insbesondere die Komponente in ihrer dreidimensionalen, mechanischen Form. Dieser Komponentenfit-Datenknoten wird insbesondere mit einem oder mehreren Materialien charakterisiert durch einen Material-Datenknoten (MT) und/oder über eine Bedarfsanforderung charakterisiert durch einen Bedarfsanforderung-Datenknoten (RQ) beschafft.

Komponenten sind z.B. Wärmeaustauscher, Kolonnen, Verdichter, Pumpen. Jede dieser Komponenten werden durch jeweils einen Komponententopologie-Datenknoten (TE), ein Komponentenkonzept-Datenknoten (EC) und ein Komponentenfit-Datenknoten (EF) beschrieben. Auf dem Material-Datenknoten (MT) werden Materialien der gleichen Warengruppe zusammengefasst. Eine Komponente wie eine Kolonne kann durch Materialien aus verschiedenen Warengruppen aufgebaut sein. Behälter und Einbauten von Kolonnen können z.B. über unterschiedliche Hersteller beschafft und werden daher unterschiedlichen Warengruppen zugeordnet.

Die organisationsbezogenen Datenknoten und organisationsbezogenen Knotentypen des Organisationsmodells können beispielsweise ebenfalls drei verschiedene Ebenen repräsentieren, beispielsweise eine Steuerungsebene, eine Vermögensebene und eine Operationsebene. Die Organisation des Herstellungsprozesses kann in der Steuerungsebene beispielsweise durch einen Geschäftseinheit-Datenknoten (EN) repräsentiert werden. Informationen über dazugehörige Geschäftssitze werden beispielsweise auf einem Geschäftssitz-Datenknoten (BS) hinterlegt. Die Geschäftseinheit kann ferner über einen Programm-Datenknoten (PG), einen Arbeitspaket-Datenknoten (WP) und über einen Geschäftsfunktionsknoten (BF), z.B. Produktlinien, charakterisiert werden.

Geschäftseinheit-Datenknoten (EN) können z.B. operative Gesellschaften sein. Eine operative Gesellschaft kann z.B. in unterschiedlichen Orten Niederlassungen besitzen. Diese unterschiedlichen Niederlassungen werden durch jeweils einen Geschäftssitz-Datenknoten (BS) beschrieben. Programm-Datenknoten (PG) können z.B. Verkaufs- und Einkaufsprogramme beschreiben. Ein Verkaufsprogramm bezieht sich auf bestimmte Produkte, z.B. Anlagentypen, und berücksichtigt die in den Herstellungsprozess des Produktes involvierten Geschäftseinheiten. Der gesamte Herstellungsprozess kann in Arbeitspakete unterteilt werden. Diese Arbeitspakete werden auf Arbeitspaket-Datenknoten (WP) beschrieben.

Auf der Vermögensebene kann die Organisation des Herstellungsprozesses beispielsweise durch einen Vermögenswert-Datenknoten (VA) repräsentiert werden. Informationen über dazugehörige Produktions- und Engineering-Stätten (Werke) werden beispielsweise in einem Werk-Datenknoten (FA) hinterlegt. Ferner kann die Vermögensebene der Geschäftseinheit durch einen Organisationseinheit-Datenknoten (OU), einen Werkzeug-Datenknoten (RS) und einen Arbeitsschritt-Datenknoten (WS) definiert bzw. charakterisiert werden.

Der Vermögenswert-Datenknoten (VA) beschreibt den Herstellungsprozess aus buchungstechnischer Sicht. Organisationseinheiten können Fachgebiete wie "Elektrotechnik", "Verfahrenstechnik", "Betriebstechnik" sein. Arbeitspakete des Herstellungsprozesses werden beispielsweise in Arbeitsschritte (Arbeitsschritt-Datenknoten) unterteilt, für die eine bestimmte Organisationseinheit (Organisationseinheit-Datenknoten) verantwortlich ist. Zur Umsetzung dieser Arbeitsschritte können Werkezeuge wie Maschinen oder Software-Programme, beschrieben durch den Werkzeug-Datenknoten, benötigt werden.

Auf der Operationsebene wird die Organisation des Herstellungsprozesses insbesondere durch einen Aktivität-Datenknoten (WA), einen Rollen-Datenknoten (RO), einen Personen-Datenknoten (IN) und einen Knowhow-Datenknoten (KH) repräsentiert. Informationen bezüglich in Arbeitsschritten veränderten Materialien bzw. Objekten sind insbesondere auf einem Veränderungs-Datenknoten (CO) hinterlegt.

Die für den Herstellungsprozess benötigten Arbeitsschritte können wiederum in einzelne Tätigkeiten (Aktivität-Datenknoten) unterteilt werden. Diese Tätigkeiten werden von Personen (Personen-Datenknoten), denen Rollen (Rollen-Datenknoten) zugewiesen werden, durchgeführt. Zur Durchführung der Tätigkeit ist ein bestimmtes Wissen notwendig, das in Form von beispielsweise Arbeitsanweisungen oder Betriebsanleitungen bereitgestellt werden kann. Dieses für eine bestimmte Tätigkeit benötigte Wissen kann auf einem Knowhow-Datenknoten beschrieben werden. Tätigkeiten können sich auf einen Objekttyp beziehen. Durch die Tätigkeit verändern sich bestimmte Eigenschaften dieses Objektes. Der Veränderungs-Datenknoten beschreibt die Veränderungen, die durch die Tätigkeit an einem Objekttyp veranlasst werden.

Diese Datenknoten können in unterschiedlichen computerimplementierten Räumen bzw. Projekträumen (logischen Zuordnungsgruppen) bzw. Datenbanken angelegt werden, in SAP können dafür z.B. verschiedene "Klassenarten" verwendet werden. Diese Räume können z.B. zwischen einem Portfolio und einem Projekt oder zwischen Gesamt- und Teilorganisation unterscheiden. In den entsprechenden Komponententabellen können beispielsweise als Daten bezüglich der Eigenschaften der Objekte Stutzen- oder Sektionsdaten im Anlagenmodell, Fachgruppen im Organisationseinheit-Datenknoten, Berechtigungsrollen im Rollen-Datenknoten, Vermögenswerte im Vermögens-Datenknoten abgelegt werden.

Am Anfang des Projektes werden somit beide Modelle konfiguriert, entsprechend vorgegebener Kundenanforderungen aus einem Portfolio zusammengestellt und anschließend (sukzessive oder in einem Schritt) in einen Projekt-Kontext kopiert. So können einerseits Mitarbeitern in jedem Arbeitsschritt die für sie relevanten Daten zur Verfügung gestellt und andererseits der Projektleitung die Konsequenzen der Wiederverwendung bzgl. Anlagen- und Organisationsmodell transparent dargestellt werden, z.B. Terminpläne, Stundenaufwand, Kosten, Schnittstellen. Durch die Kopie in den Projekt-Kontext werden unabhängige Instanzen der Knoten und Beziehungen generiert, die in dem Projekt ggf. geändert oder mit weiteren Daten befüllt werden können.

In dem Produkt-Portfolio werden insbesondere Standardobjekte in Form von Produktstrukturen verschiedener Produkte, d.h. mögliche Datenknoten mit ihren möglichen Beziehungen, vorgehalten. Dadurch kann die Verwendung von gleichen Objekten (beschrieben durch Datenknoten) in unterschiedlichen Produkten abgebildet werden, ohne redundante Daten und Beziehungen vorhalten zu müssen. Ein Verwendungsnachweis kann dadurch transparent dargestellt werden und die Produktpflege kann vereinfacht werden.

Ein Standardobjekt eines Knotentyps kann beispielsweise durch Verwendung früherer Daten definiert werden. Wenn für andere verfahrenstechnische Vorrichtungen spezielle vorrichtungsspezifische Objekte bereits verbaut wurden, können die entsprechenden Daten in das Standardobjekt eines Knotentyps eingepflegt werden. Somit können für den Herstellungsprozess verfahrenstechnischer Vorrichtungen Daten aus bereits durchgeführten Herstellungsprozessen, z.B. aus Vorgängerprojekten, zur Verfügung gestellt werden.

Insbesondere besteht die Möglichkeit, in dem Produkt-Portfolio "Dummy-Knoten" vorzuhalten, die gar nicht oder nur sehr rudimentär über Attribute beschrieben sind. Derartige Dummy-Knoten stehen insbesondere für projektspezifische Lösungen, d.h. es gibt für das repräsentierte Objekt keine Standardlösung. Die Hauptinformation des Dummy-Knoten ist in diesem Fall insbesondere das Beziehungswissen.

In dem Projekt-Kontext wird für jeden anlagenbezogenen Datenknoten des Anlagenmodells der Wiederverwendungsgrad definiert. Bezeichnungen für Wiederverwendungsgrade können z.B. "fix", "ähnlich" und "projektspezifisch" sein. Entsprechend dem Wiederverwendungsgrad wird der Ausgangsstatus der Datenknoten für das Projekt festgelegt. Hat beispielsweise ein Objekt bzw. Equipment, das schon einmal spezifiziert und gefertigt wurde, den Wiederverwendungsgrad "fix", dann wird insbesondere allen diesem Objekt bzw. Equipment zugehörigen Datenknoten der Status "issued for manufacturing" zugeteilt.

Ein Abwicklungsmodell und damit verknüpfte Datenknoten des Organisationsmodells können entsprechend den projektspezifischen Gegebenheiten zusammengestellt und anschließend in den Projekt-Kontext kopiert werden. Dieses Abwicklungsmodell eines aktuellen Projektes definiert insbesondere, welche Teile des Organisationsdatenmodells für den Herstellungsprozess der verfahrenstechnischen Vorrichtung relevant sind und wie sich die Wechselwirkung zwischen Wiederverwendungsgrad in dem Anlagenmodell und einzelnen Arbeitsaktivitäten des Organisationsmodells gestaltet. Es kann unterschiedliche Abwicklungsmodelle mit unterschiedlichem Lieferumfang ("scope split") der involvierten Geschäftseinheiten (intern und extern) zu einem gegebenen Anlagenmodell geben.

Der Lieferumfang der an dem Herstellungsprozess beteiligten Entitäten auf Kundenseite und Auftragsnehmerseite (sog. "scope split" oder "supply scope") wird insbesondre auf einem Lieferumfang-Datenknoten ("supply scope" Datenknoten) und dessen Variant-Datenknoten in dem Projekt-Kontext eindeutig definiert. Dieser Lieferumfang-Datenknoten verknüpft das Anlagenmodell mit dem Organisationsmodelle der involvierten Entitäten. Eintragungen auf diesem Lieferumfang-Datenknoten und dessen Variant-Knoten steuern die über Arbeitspaket und Arbeitsschritt verknüpften Arbeitsaktivitäten in dem Organisationsmodell.

Die vorliegende Erfindung stellt somit eine Möglichkeit zum Dokumentieren des Herstellungsprozesses der verfahrenstechnischen Vorrichtung bereit. Anhand des Anlagen- und Organisationsmodells kann der aktuelle Zustand bzw. Fortschritt des Herstellungsprozesses nachvollzogen, dokumentiert und überwacht werden.

Beispielsweise kann auf diese Weise ein Arbeitsumfang bzw. ein Arbeitsvorrat für bestimmte Aktivitäten des Herstellungsprozesses anhand des Anlagen- und Organisationsmodells evaluiert werden. Der Arbeitsvorrat für eine Aktivität einer bestimmten Rolle in einer Organisationseinheit resultiert insbesondere aus der Summe der anlagenbezogenen Datenknoten des Anlageneinheit und der organisationsbezogenen Datenknoten des Organisationsmodells, die zu dieser Aktivität über Knotentyp, Klasse und/oder Unterklasse in Beziehung stehen, die über den Lieferumfang-Datenknoten der entsprechenden Organisationseinheit zugeordnet sind und deren Status noch nicht den durch die Aktivität zu erreichenden Status aufweisen.

## Patentansprüche

1. Verfahren zum computerimplementierten Modellieren eines Herstellungsprozesses einer verfahrenstechnischen Vorrichtung, welche aus Modulen und Komponenten zusammengesetzt ist,
wobei ein Anlagenmodell, welches die herzustellende verfahrenstechnische Vorrichtung beschreibt, in einer computerimplementierten Datenbank erstellt wird (210),
wobei anlagenbezogene Knotentypen definiert werden (211), die jeweils einem speziellen Typ eines vorrichtungsspezifischen Objekts zugeordnet sind, wobei die herzustellende verfahrenstechnische Vorrichtung, ein Modul der verfahrenstechnischen Vorrichtung und eine Komponente der verfahrenstechnischen Vorrichtung jeweils ein vorrichtungsspezifisches Objekt darstellen,
wobei als Teil des Anlagenmodells in der Datenbank wenigstens ein anlagenbezogener Datenknoten eines anlagenbezogenen Knotentyps erstellt wird (212), wobei einzelne anlagenbezogene Datenknoten des Anlagenmodells gemäß vorgegebenen Attributen des anlagenbezogenen Knotentyps miteinander verknüpft werden,
wobei in den anlagenbezogenen Datenknoten Daten bezüglich der jeweiligen vorrichtungsspezifischen Objekte hinterlegt werden (230), die im Laufe des Herstellungsprozesses der verfahrenstechnischen Vorrichtung gesammelt werden,
wobei für wenigstens einen anlagenbezogenen Datenknoten ein Wiederverwendungsgrad definiert wird, der ein Ausmaß beschreibt, zu welchem das von dem wenigstens einen anlagenbezogenen Datenknoten beschriebene vorrichtungsspezifische Objekt mit einem Standardobjekt des jeweiligen anlagenbezogenen Knotentyps übereinstimmt.

2. Verfahren nach Anspruch 1, wobei die anlagenbezogenen Knotentypen jeweils einen Zustand und/oder Eigenschaften des speziellen Typs des vorrichtungsspezifischen Objekts beschreiben.

3. Verfahren nach Anspruch 2, wobei der Zustand eine Entwicklungsstufe des speziellen Typs des vorrichtungsspezifischen Objekts beschreibt.

4. Verfahren nach einem der vorstehenden Ansprüche, wobei für wenigstens einen anlagenbezogenen Knotentyp wenigstens ein verknüpfter zusätzlicher Knotentyp erstellt wird, welcher zusätzliche Eigenschaften des jeweiligen vorrichtungsspezifischen Objekts beschreibt.

5. Verfahren nach einem der vorstehenden Ansprüche,
wobei ein Organisationsmodell, welches den Herstellungsprozess der verfahrenstechnischen Vorrichtung beschreibt, in der Datenbank erstellt wird (220),
wobei organisationsbezogene Knotentypen definiert werden (221), die jeweils einem speziellen Typ eines herstellungsspezifischen Objekts zugeordnet sind, wobei eine Tätigkeit und/oder eine Organisation des Herstellungsprozesses der verfahrenstechnischen Vorrichtung jeweils ein herstellungsspezifisches Objekt darstellen,
wobei als Teil des Organisationsmodells wenigstens ein organisationsbezogener Datenknoten eines organisationsbezogenen Knotentyps erstellt wird (222), wobei einzelne organisationsbezogene Datenknoten des Organisationsmodells gemäß vorgegebener Attribute des organisationsbezogenen Knotentyps miteinander verknüpft werden, und
wobei in den organisationsbezogenen Datenknoten Daten bezüglich der jeweiligen herstellungsspezifischen Objekte hinterlegt werden (230), die im Laufe des Herstellungsprozesses der verfahrenstechnischen Vorrichtung gesammelt werden.

6. Verfahren nach Anspruch 5, wobei eine Veränderung eines organisationsbezogenen Datenknotens des Organisationsmodells, dessen Typ eine Tätigkeit des Herstellungsprozesses charakterisiert, zu einer Veränderung von anlagenbezogenen Datenknoten des Anlagenmodells und/oder von organisationsbezogenen Datenknoten des Organisationsmodells führt, welche mit dem Typ dieses veränderten organisationsbezogenen Datenknotens des Organisationsmodells verknüpft sind.

7. Verfahren nach Anspruch 5 oder 6, wobei ein spezieller Datenknoten das Analgenmodell mit dem Organisationsmodell verknüpft, wobei dieser spezielle Datenknoten insbesondere einen Lieferumfang als vorrichtungsspezifisches Objekt charakterisiert.

8. Verfahren nach einem der Ansprüche 5 bis 7, wobei für verschiedene an dem Herstellungsprozess der verfahrenstechnischen Vorrichtung beteiligte Entitäten jeweils ein Organisationsmodell in der Datenbank erstellt wird.

9. Recheneinheit, die dazu eingerichtet ist, alle Verfahrensschritte eines Verfahrens nach einem der vorstehenden Ansprüche durchzuführen.

10. Computerprogramm, das eine Recheneinheit dazu veranlasst, alle Verfahrensschritte eines Verfahrens nach einem der Ansprüche 1 bis 8 durchzuführen, wenn es auf der Recheneinheit ausgeführt wird.

11. Maschinenlesbares Speichermedium mit einem darauf gespeicherten Computerprogramm nach Anspruch 10.
